# EUROPEAN PATENT SPECIFICATION

(11) **EP 1 269 784 B1**
(45) Date of publication and mention of the grant of the patent: **19.09.2007**
(21) Application number: 01914314.8
(22) Date of filing: 23.03.2001
(51) Int. Cl.: H04Q 7/38

(54) **HANDOVER IN A PACKET SWITCHED WIRELESS COMMUNICATIONS NETWORK**
WEITERREICHUNG IN EINEM PAKETVERMITTELTEN DRAHTLOSEN KOMMUNIKATIONSNETZ
TRANSFERT DANS UN RESEAU DE COMMUNICATION RADIO COMMUTE PAR PAQUETS

(30) Priority: 28.03.2000 US 192686 P; 22.11.2000 US 718713
(43) Date of publication of application: 02.01.2003
(73) Proprietor: TELEFONAKTIEBOLAGET LM ERICSSON (publ), 164 83 Stockholm (SE)
(72) Inventor: AHLSTRAND, Susanne, S-192 53 Sollentuna (SE); TEDENVALL, Lars, S-281 37 Hässleholm (SE)
(74) Representative: Hägglund, Mats O.
(86) International application number: PCT/SE2001/000639
(87) International publication number: WO 2001/074095

(56) References cited:
- EP-A2- 0 699 011
- EP-A2- 1 045 607
- WO-A1-98/15152
- US-A- 5 711 003
- US-A- 5 940 380

## Description

### BACKGROUND OF THE INVENTION

### Field of the Invention

The present invention relates generally to the field of wireless communications; and, more specifically, to a method for performing a handover between two cells in a packet switched wireless system.

### Description of the Prior Art

Recently, there has been a trend in the telecommunications community to focus more and more on wireless packet data communications rather than wireless circuit switched communications. With the tremendous increase of Internet users, and usage of Internet protocols (IP); it is believed that packet switched communications will soon become larger than the circuit switched communications that today dominates, for example, the cellular communications field.

Cellular communications system manufacturers and operators are, accordingly, searching for solutions that will be effective in integrating their existing circuit switched services with wireless packet switched services; and that can provide reliable and more spectrum efficient connections for packet switched users such as Internet users. This trend has made different types of packet switched communications system evolutions flourish; and one of the better known packet switched cellular systems in the telecommunications community, is an extension of the present GSM (Global System for Mobile Communications) cellular communications system called GPRS (General Packet Radio Service).

GPRS is a packet switched system that uses the same physical carrier structure as the present GSM cellular communications system, and that is designed to coexist with and to provide the same coverage as GSM. GPRS radio interface is thus based on a TDMA (Time Division Multiple Access) structured system with 200 kHz carriers divided into eight timeslots with GMSK (Gaussian Minimum Shift Keying) modulation. The multiplexing is such that multiple users can be allocated on the same timeslot, and utilize resources only when data needs to be transmitted. A single user can also be allocated multiple timeslots to increase the user's throughput of data over the air.

The GPRS specifications include a number of different coding schemes to be used depending on the quality of the radio carrier. With GPRS, data rates well over 100 kbps will be possible.

In addition, a new air interface mode in GSM has recently been developed which affects both packet and circuit switched modes. This new air interface mode is called EDGE (Enhanced Data rates for Global Evolution), and its main features are new modulation and coding schemes for both packet switched and circuit switched data communications. In EDGE, in addition to Gaussian Minimum Shift Keying (GMSK) modulation, which today is used in both GPRS and GSM circuit switched modes, an 8-symbol Phase Shift Keying (8PSK) modulation is introduced. This modulation can provide users with higher data rates than GMSK in good radio environments.

The packet switched data mode with EDGE modulation is called EGPRS (Enhanced GPRS), and the circuit switched data mode with EDGE modulation is called ECSD, (Enhanced Circuit Switched Data). With EGPRS and 8PSK modulation, data rates of over 384 kbps will be possible.

Recent developments relating to another TDMA based cellular system, the cellular communication system compliant to the ANSI/136 standard, hereinafter referred to as TDMA/136, has focused on a packet data system to be integrated with the TDMA/136 circuit switched mode. This packet data system will also be based on the new EDGE technology as defined for the GPRS extension. It will then allow TDMA/136 operators with a packet data mode to provide data rates up to 384 kbps on 200 kHz carriers with GMSK and 8PSK modulation as defined for EGPRS.

While the evolution of cellular packet data communications previously has focused on developing a system that efficiently utilizes resources to transfer delay-insensitive data (often referred to as best-effort data), the focus is presently shifting towards delay sensitive transmissions and higher quality of service requirements, with the main application being voice communications.

While it is today rather straightforward to establish and maintain a circuit switched connection for voice communications, a packet switched connection is traditionally designed for delay-insensitive data; and, therefore, it is not as straightforward to establish and maintain a packet switched connection for voice communications. Several changes must be made in a packet data system designed for "best-effort" data in order to make it feasible for use in delay sensitive applications such as, for example, voice communications.

One important area that requires change is the handover between two cells, i.e. when the mobile station (MS) for any reason needs to establish a connection to another cell different from the cell currently being used.

In the current GPRS, there exists no handover, only cell reselection. Handover implies a seamless transfer from one cell to another during an ongoing data transfer. In GPRS cell reselection, on the other hand, the mobile station disconnects from the old cell before it has new resources allocated in the new cell. This could be compared to cell selection in an idle mode in GSM.

The cell reselection decision is made by the mobile station. The mobile station in packet transfer mode measures the signal strength on its own and on neighboring cells. The locating algorithm is in the mobile station, i.e., no measurement reports are sent to the network. When the cell change decision has been made, the mobile station stops listening to the old cell and starts to read necessary system information in the new cell. The mobile station then accesses the new cell and sends a cell update to the SGSN (Serving GPRS Support Node). The SGSN receives the cell update and discovers that there was already an ongoing downlink packet transfer. The SGSN sends a flush message, containing the addresses of the serving and target cells and the identity of the mobile station, to the PCU (Packet Control Unit) responsible for the old cell.

If the PCU is responsible for the target cell, unacknowledged LLC (Logical Link Control) frames are moved to a queue towards the target cell and the PCU assigns new resources in the new cell and transmission is restarted. If the PCU is not responsible for the target cell, it will delete all LLC frames intended for that mobile station and leave retransmission to higher layers. This is further described in GSM 04.60: "Digital cellular telecommunications system (Phase 2+); General Packet Radio Service (GPRS); Mobile Station (MS)-Base Station System (BSS) interface; Radio Link Control/Medium Access Control (RLC/MAC) protocol, v.6.2.0", GSM 05.08: "Digital cellular telecommunications system (Phase 2+); Radio Subsystem link control, v.6.2.0" and 3G TS 23.060: "3rd Generation Partnership Project; Technical Specification Group Services and System Aspects; General Packet Radio Service (GPRS); Service description; Stage 2 v 3.2.1".

Since the mobile station stops listening to the old cell without having resources allocated in the target cell in the existing GPRS, the cell change and the LLC moving procedure in packet transfer mode interrupts the transfer by approximately 1-5 seconds, depending on how quickly the mobile station can acquire the full set of system information. This interruption time exceeds the interruption time requirement for speech (100-150 ms) considerably.

In the current EGPRS, there is a mode where the network can control the cell reselection; although in this mode, the ongoing transmission is also interrupted and must be re-established in the new cell. This mode is described in GSM 04.60 mentioned above. In order to properly support delay sensitive services in a packet data system, therefore, a handover procedure that allocates resources in advance, for example, as in GSM, is required.

To provide a seamless handover in GSM, resources in the target cell are allocated in advance before the mobile station leaves the old cell. Information about the frequency, timeslot and output power the mobile station should use is sent in the handover command. The mobile station is thus guaranteed resources in the target cell. When the handover command is received, the mobile station accesses the target cell and receives timing advance information from the target BSS (Base Station System). The handover is controlled by the network, and the mobile station sends measurement reports continuously (two reports every second) on the Slow Associated Control Channel (SACCH).

U.S. Patent No. 5,711,003 A discloses a method for performing a handover between two cells in a TDMA cellular mobile radio network in a manner so as to avoid a speech interruption.

In WO-A 01 63948 (prior art under Art. 54(3) EPC), which corresponds to US patent 7,054,285B2, the introduction of a Packet SACCH (PSACCH) is disclosed. Measurement reports from the mobile station to the network are sent on the PSACCH in the uplink direction; and system related information, e.g., timing advance value and power control values, is transmitted in the downlink direction.

U.S. Patent 5,711,003A shows a handover procedure in a GSM-system and, in particular, describes that the handover command should include a command for the mobile station not to send any access burst to the new base station. By this and determining the timing advance by the mobile station a shorter interruption time in the procedure can be achieved. This reference is not directed to a combined circuit switched and packed switched system and no handover procedure is described in which both voice and packet switched communication is involved.

EP-A-0 699 011 also shows a Handover procedure in a mobile radio system but for circuit-switched (TDMA) system. No handover procedure is described which is directed to a packed switched system in which both voice and packet switched communication is involved.

WO-A-98 15152 shows a handover procedure in a mobile radio system for circuit-switched (TDMA) system. In particular, this reference relates to a new Transcoder and Rate adaption unit (TRAU) which provides two uplink and two downlink channels in order to provide for distributed handover. This reference also relates to circuit switched mobile radio systems only and no packet switching is described.

U.S. Patent 5,940,380A also relates to a circuit-switched system only (see e.g. col. 1, lines 16-46) and describes more in detail how a mobile station can use time slots in an established. No handover procedure is described in a packed switched system and in which both voice and packet switched communication is involved.

EP-A-1 045 607 (prior art under Art. 54(3) EPC) like the other references, relates to a handover procedure in a mobile radio system for circuit-switched (TDMA) system. More in detail, it describes that the handover time can be made shorter by letting the target base station get knowledge about control information ("systemsteuerungsinformationen") before the actual handover is taking place (see the Abstract "vor einem Wechsel"). No handover procedure is described which is directed to a packed switched system in which both voice and packet switched communication is involved.

### SUMMARY OF THE INVENTION

The present invention provides a handover procedure for the packet switched domain in order to properly support delay sensitive services, such as voice over IP.

In accordance with the invention, a method is provided for handover of a mobile station from a serving base station to a target base station in a packet switched wireless communications system, as defined in Claim 1.

In the present invention, because resources are initially allocated and assigned in the target cell, the mobile station does not need to use the common control channel, which is a common resource for all users in a cell, to send access messages to the target cell. More specifically, resources are allocated in the uplink and/or downlink direction, between the mobile station and the base station while maintaining the connection between the mobile station and the serving base station, such that a mobile station may reestablish its connection to the network via the target base station in a substantially seamless manner without interrupting an ongoing data transmission session through the connection to the network via the serving base station. The data transmission session may, therefore, be a time sensitive transmission such as, for example, a voice communication session.

According to the invention, the communications system comprises a GPRS/EGPRS system, and the mobile station uses a Packet Data Channel (PDCH) and specifically, the Packet Associated Control Channel (PACCH) to access the target cell.

According to a further aspect of the invention, the mobile station uses parts of a traffic channel to transmit necessary information to the network in order to calculate physical parameters. Resources in the target cell are allocated and assigned via the serving cell. More specifically, the mobile station is given necessary information about the new cell, whereby the mobile station is able to immediately transmit information to the network without using the common control channel, shared by all users in a cell.

The above and further specific features, objects and advantages of the present invention will become apparent to those skilled in the art by reading the following detailed description where references will be made to the appended figures.

### BRIEF DESCRIPTION OF THE DRAWINGS

Figure 1 schematically illustrates a cellular pattern in an exemplary cellular communications system;
Figure 2 schematically illustrates the architecture of a packet switched system;
Figure 3 illustrates a handover procedure for a circuit switched system; and
Figure 4 illustrates the handover procedure for a packet switched system according to a presently preferred embodiment of the invention;

### DETAILED DESCRIPTION OF PRESENTLY PREFERRED EMBODIMENTS

The present invention will be described hereinafter with reference to a GPRS/EGPRS based cellular packet data communications system and extensions thereof. It should be understood, however, that the invention is also applicable to other packet switched wireless systems. In describing the invention, comparisons will be made to GSM, as representing a circuit switched communications system.

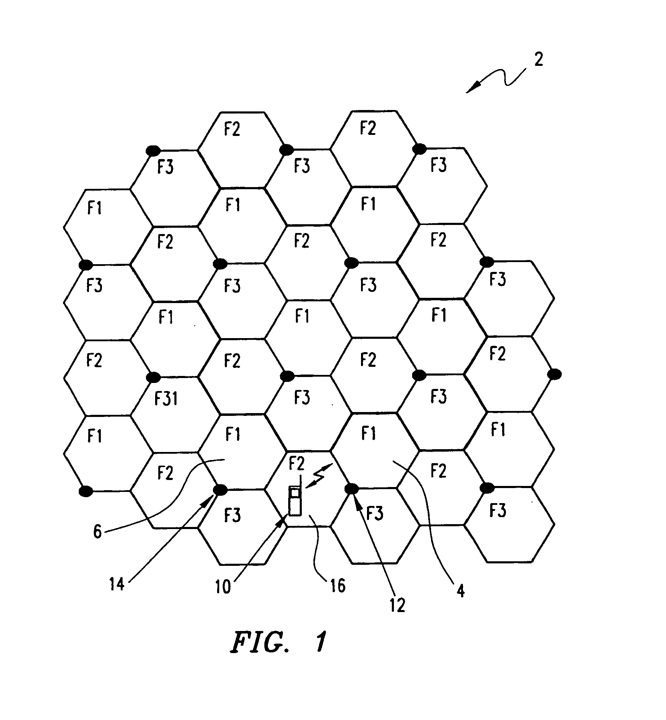

Figure 1 schematically illustrates a cellular pattern, generally designated by reference number 2, according to a GSM or GPRS/EGPRS communications system. Frequencies are typically planned to be used in a certain area, i.e., a first cell, and then re-used in another area, i.e., a second cell, that is distant from the first cell. The planning of frequencies aims to introduce sufficient re-use distance such that communication on, e.g., frequency F1 in one cell 4 does not interfere with communication on the same frequency F1 in another cell 6. In Figure 1, for example, a theoretical 1/3 reuse is illustrated where frequencies F1, F2 and F3 are evenly distributed throughout a coverage area, with each frequency serving a sub-area, or cell. The 1/3 reuse indicates that there are 3 different frequencies that are repeated throughout the coverage area. The frequencies may be planned in any reuse, depending on how much spectrum is available. It may also differ within a system, depending on topology and geographical conditions, for example.

In another deployment of a GSM communications system, timeslots are also reused to achieve a two-dimensional re-use, both a frequency and a time re-use. These principles are described in the U.S. Patent 6,438,115B1.

Referring back to Figure 1, mobile equipment, i.e., a mobile station (MS) 10 is illustrated as communicating in one cell 16 with a base station (BS) 12. The MS may continuously measure on surrounding base stations, e.g., BS 14, to find a candidate BS with which to make a handover, in a situation when the serving base station 12 cannot sufficiently maintain the communication. This may happen, e.g., when the mobile station is traveling away from a serving base station 12 and approaching another base station. Measurements may be reported to the network via the serving BS 12, and a handover decision may be made in the network. The measurement reports may contain signal strength or quality measurements like BER (bit error rate) or (BLER) block error rate. The mobile station measures on the connection from the network towards the mobile station.

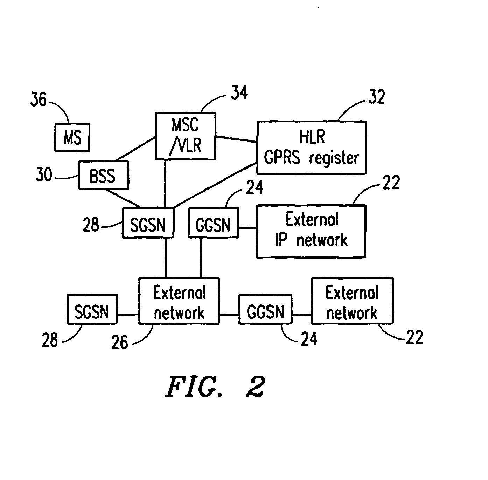

Figure 2 illustrates the architecture for a packet switched system such as GPRS. Information packets from an external network 22 will enter the GPRS network at a GGSN (Gateway GPRS Support Node) 24. The packets are then routed from the GGSN 24 via the backbone network 26 to a SGSN 28 that is serving the area in which the addressed GPRS mobile station (36) resides. From the SGSN, the packets are routed to the correct BSS (Base Station System) 30, in a dedicated GPRS transmission. A GPRS register may or may not be integrated with an HLR (Home Location register) of the GSM system (The HLR and GPRS register are illustrated at 32 in Figure 2). Subscriber data may be interchanged between the SGSN 28 and MSC (Mobile Services Switching Center) 34 (which may be coupled to a Visitor Location Register (VLR)) to ensure service interaction, such as, for example, restricted roaming.

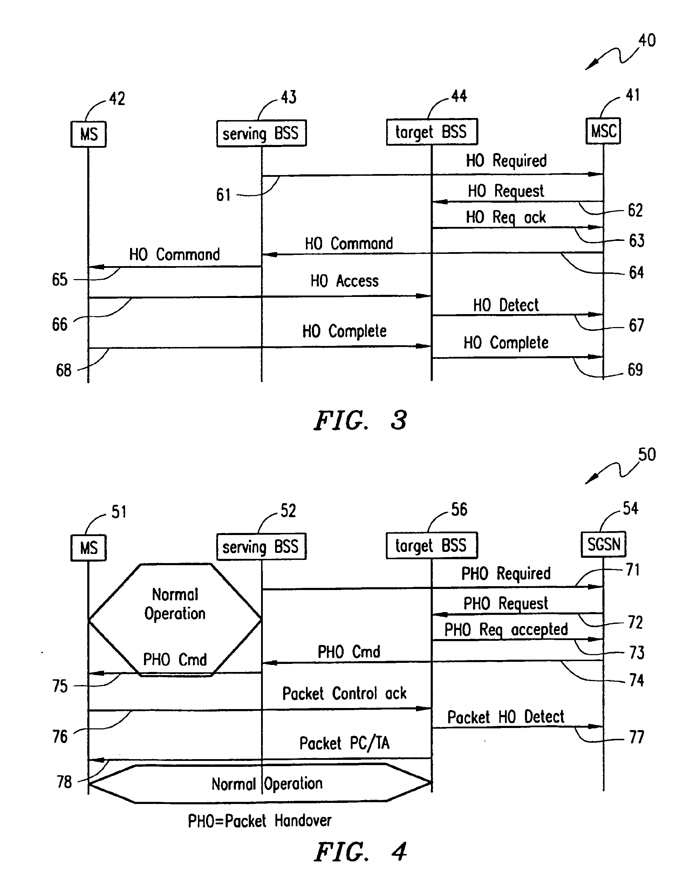

Figure 3 schematically illustrates the handover procedure 40 for a circuit switched GSM system. The serving BSS 43 advises the MSC 41 that a handover is required (HO Required 61), the MSC requests a handover from the target BSS 44 (HO Request 62) and the target BSS acknowledges the request (HO Req ack 63). In order to provide a seamless handover in GSM, resources in the target cell are allocated in advance before the mobile station leaves the old cell. Information about the frequency, timeslot and output power the mobile station should use is sent in the handover command (HO Command 64,65) from the MSC 41 to the mobile station 42 via the serving BSS 43. The mobile station is thus guaranteed resources in the target cell. As illustrated in Figure 3, when the handover command is received, the mobile station 42 accesses the target cell (HO Access 66) and receives timing advance information from the target BSS 44. The target BSS 44 notifies the MSC 41 that the handover has been detected (HO Detect 67) and the mobile station sends a handover complete message (HO Complete 68,69) to the MSC via the target BSS. The handover is controlled by the network and the mobile station sends measurement reports continuously (two reports every second) on the Slow Associated Control Channel (SACCH).

Figure 4 illustrates the handover procedure 50 for the packet switched domain; specifically, for a GPRS/EGPRS based packet data communications system according to a presently preferred embodiment of the present invention. In the following discussion, it is assumed that the network knows that a handover has to be performed (this can, for example, be done by using the Packet SACCH (PSACCH) as described above and let the network make the handover decision based on the measurement reports received from the mobile station), and that the target cell is identified.

As shown in Figure 4, the serving BSS 52, serving a mobile station 51, sends a Packet Handover Required (PHO Required 71) to the SGSN (Serving GPRS Support Node) 54, and the SGSN starts negotiating with the target BSS 56 for resources in order to fulfill the QoS-requirement (Quality of Service) for the flows concerned. If resources in the target BSS 56 are available according to the Packet Handover Request (PHO Request 72), Packet Handover Accepted (PHO Req accepted 73) is sent to the SGSN 54 from the target BSS. When the handover request is accepted by the new BSS 56, a copy of BSS context (the BSS context contains e.g. QoS-parameters such as delay and throughput requirements) in the serving cell is transmitted to the target cell. The BSS context in the serving cell is then deleted when handover is successfully performed.

When resources in the target cell are allocated (PHO Req accepted 73), a Packet Handover Command (PHO Cmd 74,75) is sent from the SGSN to the mobile station 51 via the serving BSS 52. The Packet Handover Command may contain frequency, BSIC, a reduced Packet Uplink Assignment and/or a reduced Packet Downlink Assignment message. When the Handover Command is received at the mobile station, the mobile station then tunes to the target cell. Up to this time, as shown in Figure 4, normal operation is maintained between the mobile station and the serving base station such that, for example, an ongoing data transfer between the mobile station and the network through the serving base station will not be interrupted.

In order to obtain timing advance value, a modified Packet Polling Request is included in the Packet Handover Command. The mobile station responds with a Packet Control acknowledgment ( Packet Control ack 76) (sent in four identical access bursts) transmitted on the PACCH on the new frequency to the target base station. The SGSN 54 is sent a packet handover detect signal (Packet HO Detect 77) whereupon the network sends a Packet Power Control/Timing Advance message (Packet PC/TA 78), also sent on the PACCH to the mobile station.

When the mobile station has received the timing advance value, transmission can be restarted in the new cell; i.e., normal operation is re-established between the mobile station and the network via the target base station as is shown in Figure 4. In the new cell, the mobile station may acquire system information and the remaining parts of the Packet Uplink and/or Downlink Assignment messages.

By using the above-described procedure, resources in the target cell are initially assigned via the serving cell, and the mobile station thus does not need to send access messages on the Common Control Channel, Packet Random Access Channel (PRACH) (i.e. perform a one or two phase access) before the transmission can be restarted.

In general, the present invention provides a handover procedure for packet switched communications systems that is similar to that used in circuit switched systems; while, at the same time, using the current EGPRS standard, for example, the Packet Control ack and the PC/TA messages, as much as possible.

The messages mentioned above are further described in GSM 04.60.

Although the present invention has been described with examples from a packet switched communication system compliant to the EGPRS/GSM specifications, it should be noted that the solutions presented may equally be applied to any other packet switched data communications system with the same or similar structure and functionality. The specific embodiments described herein should, therefore, be considered exemplary only rather than limiting the scope of the invention which is defined by the scope of the following claims.

## Claims

1. A method for handover of a mobile station (42,51) from a serving base station (43, 52) to a target base station (44, 56) in a packet switched wireless communications system including a support node, SGSN, **characterized by** the steps of:
allocating and assigning resources between the mobile station (10, 51) and the target base station (14, 56) while maintaining connection of the mobile station (10, 51) to a network of the communications system through the serving base station (12, 52), said step of allocating and assigning resources including allocating and assigning packet channels that are shared between multiple users via the serving base station (12, 52) and sending (71) from the serving base station (52) a Packet Handover Request to said SGSN in order to find a resource over a packet channel when accessing said target base station (44,56), said target base station accepting (73) said request if available,
sending (74,75) from said SGSN to the serving base station a Packet Handover Command and further to the mobile station;
sending a Packet Control Acknowledgement (76) as a response to said Packet Handover Command from the mobile station (51) to the target base station (56), and
sending (77) a Packet Handover Detect signal to said node SGSN from said target base station (56),
said response (76) to the Packet Handover Command from the mobile station to said target base station and said Packet Handover Detect signal (77) to said SGSN being sent over an allocated and assigned Packet Data Channel, PDCH.

2. The method according to claim 1, wherein said Packet Data Channel PDCH comprises a Packet Associated Control Channel PACCH.

3. The method according to any of claims 1-4, wherein said method further includes, before the allocating and assigning step, the steps of determining that a handover of said mobile station (10, 51) is required, and identifying the target base station (14, 56) to which the handover is to be made.

4. The method according to any of claims 1-3, wherein said allocating and assigning step (71-73) being performed while maintaining connection of the mobile station (51) to a network of the communications system through the serving base station (52) so as to provide a substantially seamless handover of said mobile station (51) from said serving base station (52) to said target base station (56) without interrupting an ongoing data transmission session between said mobile station (10, 51) and the network.

5. The method according to claim 1, and further comprising the step of sending a Packet Power Control/Timing Advance (PC/TA) message (78) to the mobile station (10, 51) over the Packet Data Channel (PDCH).

## Patentansprüche

1. Verfahren zur Übergabe einer Mobilstation (42, 51) von einer bedienenden Basisstation (43, 52) an eine Zielbasisstation (44, 56) in einem paketvermittelten drahtlosen Kommunikationssystem mit einem Unterstützungsknoten SGSN, **gekennzeichnet durch** folgende Schritte:
das Zuordnen und Zuteilen von Ressourcen zwischen der Mobilstation (10, 51) und der Zielbasisstation (14, 56), während die Verbindung der Mobilstation (10, 51) mit einem Netzwerk des Kommunikationssystems **durch** die bedienende Basisstation (12, 52) aufrechterhalten wird, wobei der Schritt des Zuordnens und Zuteilens von Ressourcen das Zuordnen und Zuteilen von Paketkanälen, die von mehreren Benutzern gemeinsam über die bedienende Basisstation (12, 52) benutzt werden, und das Senden (71) einer Paket-Übergabe-Anforderung von der bedienenden Basisstation (52) an den SGSN beinhaltet, um beim Zugriff auf die Zielbasisstation (44, 56) eine Ressource über einen Paketkanal zu finden, wobei die Zielbasisstation, falls verfügbar, die Anforderung akzeptiert (73),
Senden (74, 75) eines Paket-Übergabe-Befehls von dem SGSN an die bedienende Basistation und weiter an die Mobilstation;
Senden einer Paket-Steuerbestätigung (76) als Antwort auf den Paket-Übergabe-Befehl von der Mobilstation (51) an die Zielbasisstation (56), und
Senden (77) eines Paket-Übergabe-Detektiersignals an den SGSN Knoten von der Zielbasisstation (56),
wobei die Antwort (76) auf den Paket-Übergabe-Befehl von der Mobilstation an die Zielbasisstation und das Paket-Übergabe-Detektiersignal (77) an den SGSN über einen zugeordneten und zugeteilten Paketdatenkanal PDCH gesendet werden.

2. Verfahren nach Anspruch 1, wobei der Paketdatenkanal PDCH ein mit dem Paket verbundener Steuerkanal PACCH ist.

3. Verfahren nach einem der Ansprüche 1 - 4, wobei das Verfahren ferner, vor dem Schritt des Zuordnens und Zuteilens, die Schritte des Bestimmens, dass eine Übergabe der Mobilstation (10, 51) benötigt wird, und des Identifizierens der Zielbasisstation (14, 56), an die die Übergabe erfolgen soll, beinhaltet.

4. Verfahren nach einem der Ansprüche 1-3, wobei der Schritt des Zuordnens und Zuteilens (71 - 73) durchgeführt wird, während die Verbindung der Mobilstation (51) mit einem Netzwerk des Kommunikationssystems durch die bedienende Basisstation (52) aufrechterhalten wird, um eine weitgehend nahtlose Übergabe der Mobilstation (51) von der bedienenden Basisstation (52) an die Zielbasistation (56) vorzusehen, ohne eine laufende Datenübertragungssitzung zwischen der Mobilstation (10, 51) und dem Netzwerk zu unterbrechen.

5. Verfahren nach Anspruch 1, und ferner umfassend den Schritt des Sendens einer PC/TA (Packet Power Control/Timing Advance) Nachricht (78) an die Mobilstation (10, 51) über den Paketdatenkanal (PDCH).

## Revendications

1. Procédé de transfert d'une station mobile (42, 51) à partir d'une station de base de desserte (43, 52) à une station de base cible (44, 56) dans un système de communication sans fil à commutation de paquets comprenant un noeud de support, SGSN, **caractérisé par** les étapes de:
allocation et assignation de ressources entre la station mobile (10, 51) et la station de base cible (14, 56) tout en maintenant une connexion de la station mobile (10, 51) à un réseau de système de communication à travers la station de base de desserte (12, 52), ladite étape d'allocation et d'assignation de ressources comprenant l'allocation et l'assignation de canaux de paquets qui sont partagés entre de multiples utilisateurs via la station de base de desserte (12, 52), et envoi (71) à partir de la station de base de desserte (52) d'une demande de transfert de paquets audit SGSN afin de trouver une ressource sur un canal de paquets lors de l'accès à ladite station de base cible (44, 56), ladite station de base cible acceptant (73) ladite demande si disponible,
envoi (74, 75) à partir dudit SGSN à ladite station de base de desserte d'une commande de transfert de paquets et en outre à la station mobile;
envoi d'un accusé de réception de commande de paquets (76) comme une réponse à ladite commande de transfert de paquets à partir de la station mobile (51) à ladite station de base cible (56), et
envoi (77) d'un signal de détection de transfert de paquets audit noeud SGSN à partir de ladite station de base cible (56),
ladite réponse (76) à la commande de transfert de paquets à partir de la station mobile à ladite station de base cible et ledit signal de détection de transfert de paquets (77) audit SGSN étant envoyés sur un canal de données de paquets alloué et assigné, PDCH.

2. Procédé selon la revendication 1, dans lequel ledit canal de données de paquets PDCH comprend un canal de commande de paquets associé PACCH.

3. Procédé selon l'une quelconque des revendications 1 à 4, dans lequel ledit procédé comprend en outre, avant l'étape d'allocation et d'assignation, les étapes de détermination qu'un transfert de ladite station mobile (10, 51) est requis, et identification de la station de base cible (14, 56) à laquelle le transfert est à effectuer.

4. Procédé selon l'une quelconque des revendications 1 à 3, dans lequel ladite étape d'allocation et d'assignation (71 à 73) étant réalisée tout en maintenant une connexion de la station mobile (51) à un réseau du système de communication à travers la station de base de desserte (52) afin de fournir un transfert essentiellement sans interruption de ladite station mobile (51) à partir de la station de base de desserte (52) à ladite station de base cible (56) sans interrompre une session de transmission et de données sortantes entre ladite station mobile (10, 51) et le réseau.

5. Procédé selon la revendication 1, et comprenant en outre l'étape d'envoi d'un message de commande de puissance de paquets / avance de temporisation (PC/TA) (78) à la station mobile (10, 51) sur le canal de données de paquets PDCH.
